# EUROPÄISCHE PATENTSCHRIFT

(11) **EP 2 650 250 B1**
(45) Veröffentlichungstag und Bekanntmachung des Hinweises auf die Patenterteilung: **10.08.2016**
(21) Anmeldenummer: 13163469.3
(22) Anmeldetag: 12.04.2013
(51) Int. Cl.: B21F 23/00, E04G 21/00, B66D 3/00, E21B 19/22

(54) **Vorrichtung und Anordnung zum Ziehen eines Zugmittels**
Device and assembly for pulling a traction means
Dispositif et agencement pour tirer un moyen de traction

(30) Priorität: 12.04.2012 DE 102012103151
(43) Veröffentlichungstag der Anmeldung: 16.10.2013
(73) Patentinhaber: TERRA AG fuer Tiefbautechnik, 6260 Reiden (CH)
(72) Erfinder: Jenne, Dietmar, 4805 Brittnau (CH); Stauffer, Alexander, 3380 Walliswil (CH)
(74) Vertreter: Schaumburg und Partner Patentanwälte mbB

(56) Entgegenhaltungen:
- EP-A2- 1 036 747
- WO-A1-96/15061
- DE-A1- 2 354 767
- DE-C1- 10 011 994
- GB-A- 1 237 637
- US-A- 2 884 120
- US-A- 5 094 340

## Beschreibung

Die Erfindung betrifft eine Vorrichtung und eine Anordnung zum Ziehen eines Zugmittels. Als Zugmittel eignen sich insbesondere ein Seil, ein Gestänge oder eine Kette. Bekannte Vorrichtungen zum Ziehen eines Zugmittels haben zwei Klemmbacken, die das Zugmittel auf zwei gegenüberliegenden Seiten kontaktieren. Zum einfachen Positionieren des Zugmittels zwischen den Klemmbacken haben diese jeweils eine Klemmnut, deren Längsachse parallel zu der Längsachse des im Klemmbereich angeordneten Zugmittels verläuft. Zwischen den Klemmbacken und dem Zugmittel wird bei bekannten Vorrichtungen eine im Wesentlichen kraftschlüssige Verbindung hergestellt. Dabei ist die von den Klemmbacken auf das Zugmittel übertragbare Zugkraft entscheidend von der durch die Klemmbacken auf das Zugmittel ausgeübten Andruckkraft abhängig.

Bekannte Vorrichtungen zum Ziehen eines Zugmittels werden insbesondere zum Erneuern von Leitungsrohren, zum Verlegen von Leitungsrohren, zum Ziehen eines Rohrberst-, Splitt-, oder Schneidwerkzeugs und/oder eines Aufweitkopfs genutzt, wobei diese gezogenen Elemente an einem von der Vorrichtung entfernten Ende des Zugmittels mit diesem verbunden sind. Bekannte Seilzugvorrichtungen für diese Zwecke sind in den Dokumenten EP 1634 848 A2 und DE 10 2007 015 287 A1 offenbart. Eine Gestängezugvorrichtung ist aus dem Dokument DE 10 2009 038 058 A1 bekannt.

Aus dem Dokument EP 1036 747 A2 ist eine Vorrichtung zum Ziehen eines Zugmittels bekannt, bei der mehrere Klemmbacken zum Kontaktieren des Zugmittels als umlaufende Kette hintereinander angeordnet sind. Das Zugmittel ist zwischen zwei solchen Ketten hindurchgeführt, sodass jeweils zwei gegenüberliegend angeordnete Backen das Zugmittel an gegenüberliegenden Seiten kontaktieren. Die Backen haben eine v-förmige Nut, wobei der Nutgrund einen teilkreisförmigen Querschnitt hat.

Aufgabe der Erfindung ist es, eine Vorrichtung und eine Anordnung zum Ziehen eines Zugmittels anzugeben, durch die eine kraftschlüssige Verbindung mit dem Zugmittel einfach herstellbar ist.

Diese Aufgabe wird durch eine Vorrichtung zum Ziehen eines Zugmittels mit den Merkmalen des Anspruchs 1 und jeweils durch eine Anordnung mit den Merkmalen des Anspruchs 11 oder 12 gelöst. Vorteilhafte Weiterbildungen der Erfindung sind in den abhängigen Ansprüchen angegeben.

Durch eine Vorrichtung zum Ziehen eines Zugmittels, insbesondere durch das Vorsehen der in einem Teilbereich der Klemmnut ausgebildeten Freiraumnut, wird eine verbesserte Kraftübertragung zum Herstellen der kraftschlüssigen Verbindung zwischen dem Zugmittel und der Klemmbacke erreicht. Insbesondere kann durch das Vorsehen der Freiraumnut die von der Klemmbacke auf das Zugmittel zum Herstellen der kraftschlüssigen Verbindung wirkende Andruckkraft gegenüber einer Klemmbacke ohne Freiraumnut bei gleicher Krafteinwirkung auf die Klemmbacke erhöht werden.

Durch das Vorsehen einer Freiraumnut wird zusätzlich innerhalb der Klemmbacke ein Freiraum geschaffen, in dem am Zugmittel befindliche Partikel, insbesondere Baustellenschmutz, aufgenommen werden kann, sodass die Kraftübertragung auch auf verschmutzte Zugmittel erheblich verbessert ist.

Als Antriebseinheit kann insbesondere ein Hydraulikzylinder vorgesehen sein, der eine Zugkraft erzeugt, die über die zwischen der Klemmbacke und dem Zugmittel hergestellte kraftschlüssige Verbindung übertragen wird. Als Zugmittel eignet sich insbesondere ein Seil, ein Gestänge oder eine Kette.

Vorzugsweise hat das Zugmittel zumindest im Klemmbereich einen runden Querschnitt. Alternativ oder zusätzlich hat das Zugmittel eine das Zugmittel umschließende zylinderförmige Hüllmantelfläche. Als Zugmittel eignen sich insbesondere gedrehte und/oder geflochtene Stahlseile, die flexibel sind, sodass sie mit Hilfe von Umlenkrollen umgelenkt und mit Hilfe von Aufwickeltrommeln aufgewickelt werden können. Im Unterschied zu aus mehreren Gestängeabschnitten zusammengesetzten Gestängen ist die Handhabung eines Drahtseils einfacher, da das Zusammensetzen des Gestänges aus mehreren Gestängeabschnitten bzw. die Demontage eines aus mehreren Gestängeabschnitten bestehenden Gestänges entfällt.

Es ist eine erste Klemmbacke vorgesehen, die eine erste Klemmnut und eine erste Freiraumnut hat und das Gegendruckelement ist durch mindestens eine der ersten Klemmbacke gegenüberliegende zweite Klemmbacke gebildet. Die zweite Klemmbacke hat eine zweite Klemmnut zum teilweisen Umschließen des Zugmittels, wenn dies im Klemmbereich angeordnet ist. Ferner ist mindestens eine zumindest in einem Teilbereich der zweiten Klemmnut ausgebildete zweite Freiraumnut vorgesehen, deren Längsachse parallel zur Längsachse der zweiten Klemmnut verläuft. Durch das Kontaktieren des Zugmittels mit Hilfe von zwei vorzugsweise einander gegenüberliegend angeordneten Klemmbacken kann auf einfache Weise eine kraftschlüssige Verbindung zwischen den Klemmbacken und dem Zugmittel hergestellt und die Kraftübertragung zwischen den Klemmbacken und dem Zugmittel zum Herstellen der kraftschlüssigen Verbindung verbessert werden. Insbesondere kann durch das Vorsehen der Freiraumnut die von den Klemmbacken auf das Zugmittel wirkenden Andruckkräfte gegenüber Klemmbacken ohne Freiraumnut bei gleicher Krafteinwirkung auf die Klemmbacken erhöht werden.

Die Freiraumnut erstreckt sich vorzugsweise entlang der gesamten Länge der jeweiligen Klemmnut. Besonders vorteilhaft ist es, wenn sich die Klemmnut über die gesamte Länge der dem Zugmittel zugewandten Seite der Klemmbacke erstreckt, wenn das Zugmittel im Klemmbereich angeordnet ist. Dadurch kann das Zugmittel einfach durch den zwischen Klemmbacke und Gegendruckelement gebildeten Klemmbereich geführt werden. Alternativ oder zusätzlich ist es vorteilhaft, wenn die Freiraumnut mittig in der Klemmnut angeordnet ist. Bei dieser Anordnung kann die von der Klemmbacke bzw. den Klemmbacken erzeugte auf das Zugmittel zum Herstellen der kraftschlüssigen Verbindung wirkende Andruckkraft gegenüber einer Klemmbacke ohne Freiraumnut bei gleicher Krafteinwirkung erhöht und/oder der Kontakt zwischen der Klemmbacke bzw. den Klemmbacken und dem Zugmittel verbessert werden.

Erfindungsgemäß sind in der ersten und/oder zweiten Klemmnut mehrere Freiraumnuten vorgesehen, die in Längsrichtung der jeweiligen Klemmnut hintereinander angeordnet sind. Alternativ oder zusätzlich können mehrere Freiraumnuten vorgesehen sein, deren Längsachsen parallel verlaufen. Durch das Vorsehen mehrerer Freiraumnuten in einer Klemmnut kann die Kraftübertragung zwischen Klemmbacke und Zugmittel weiter verbessert werden.

Besonders vorteilhaft ist es, wenn die in einer Klemmnut nebeheinander angeordneten Freiraumnuten symmetrisch zu einer Mittelebene der Klemmnut angeordnet sind. Vorzugsweise ist die Mittelebene der Klemmnut deren Symmetrieebene.

Alternativ oder zusätzlich können die erste Freiraumnut auf der ersten Seite und die zweite Freiraumnut auf der zweiten Seite einer Ebene angeordnet sein, in der die Längsachsen der ersten und zweiten Klemmnut verlaufen. Dadurch wird eine besonders günstige Anordnung der Freiraumnuten erreicht, sodass eine wirksame Kontaktierung des Zugmittels durch die Klemmbacken erfolgt.

Besonders vorteilhaft ist es, wenn die Klemmnut mehrere in Längsrichtung hintereinander angeordnete Quernuten und/oder vorstehende Elemente aufweist. Dadurch kann die Kraftübertragung zwischen Klemmbacke und Zugmittel weiter verbessert werden.

Dabei ist es vorteilhaft, wenn die Quernuten und/oder die vorstehenden Elemente durch die Freiraumnut unterbrochen sind. Alternativ kann der Querschnitt der Quernuten und/oder der vorstehenden Elemente durch die Freiraumnut lediglich vermindert sein. Dadurch wird ein einfacher Aufbau der Klemmbacken erreicht, sodass diese einfach und kostengünstig zu fertigen sind. Besonders vorteilhaft ist es, wenn die Quernuten und/oder die vorstehenden Elemente durch Gewindegangabschnitte gebildet sind. Dadurch können die Quernuten und/oder die vorstehenden Elemente auf einfache Art und Weise mit Hilfe bekannter Gewindeschneidevorrichtung hergestellt werden.

Ferner ist es vorteilhaft, die Klemmnut durch eine teilkreisförmige Vertiefung zu bilden, deren Radius größer oder gleich dem Nennradius des Zugmittels ist. Durch die Freiraumnut ist es überhaupt erst möglich, eine Klemmnut mit gleichem Radius wie dem Nennradius des Zugmittels vorzusehen, da sich in der Praxis bei Klemmnuten ohne Freiraumnut bei gleichem Radius der teilkreisförmigen Vertiefung und Nennradius des Zugmittels das Zugmittel nach einem Klemmvorgang nicht mehr ohne weiteres aus der Klemmnut lösen lässt. Durch den durch die Freiraumnut möglichen Einsatz von Zugmitteln deren Nennradius gleich dem Radius der teilkreisförmigen Vertiefung der Klemmnut ist, lässt sich die Kraftübertragung zwischen Klemmbacke und Zugmittel weiter verbessern.

Besonders vorteilhaft ist es, wenn die Freiraumnut einen teilkreisförmigen oder u-förmigen Querschnitt hat. Durch den teilkreisförmigen oder u-förmigen Querschnitt ist die Beanspruchung des Materials der Klemmbacke gegenüber rechteckigen Querschnitten der Freiraumnut verringert, sodass eine günstigere Auslegung der Klemmbacke sowie eine höhere Standzeit der Klemmbacke erreicht werden. Zusätzlich oder alternativ kann der Übergang zwischen der Klemmnut und der Freiraumnut durch eine abgerundete Kannte gebildet sein. Durch die abgerundete Kannte am Übergang zwischen Klemmnut und Freiraumnut wird die Beanspruchung des Zugmittels gegenüber einem scharfkantigen Übergang verringert und Beschädigungen des Zugmittels werden vermieden.

Besonders vorteilhaft ist es, wenn die Klemmbacke das Zugmittel zumindest mit den an den Übergängen zwischen der Klemmnut und der Freiraumnut gebildeten Kannten jeweils köntaktiert. Dadurch erfolgt die Krafteinleitung der Andruckkraft der Klemmbacken in das Zugmittel zumindest an diesen Kannten, sodass eine effiziente Kraftübertragung zwischen der Klemmbacke und dem Zugmittel erreicht wird. Dadurch lassen sich über die so gebildete kraftschlüssige Verbindung zwischen Klemmbacke und Zugmittel große Zugkräfte von der Antriebseinheit auf das Zugmittel übertragen.

Besonders vorteilhaft ist es, eine Anordnung zum Ziehen eines Zugmittels, insbesondere zum Ziehen eines Seils, eines Gestänges oder einer Kette, vorzusehen, die eine erste Klemmeinheit gemäß Anspruch 1 oder eine weiter oben beschriebenen Weiterbildung dieser Vorrichtung umfasst. Die Anordnung hat weiterhin mindestens eine zweite Klemmeinheit, die mindestens eine Klemmbacke zum Herstellen zumindest einer kraftschlüssigen Verbindung mit dem Zugmittel und zum Übertragen einer Haltekraft zwischen dem Zugmittel und der Vorrichtung hat. Das Zugmittel ist zum Herstellen der kraftschlüssigen Verbindung in einem zwischen der Klemmbacke und mindestens einem Gegendruckelement gebildeten Klemmbereich anordenbar. Die Klemmbacke hat eine Klemmnut, deren Längsachse parallel zur Längsachse des Zugmittels verläuft, wenn dieses im Klemmbereich angeordnet ist. Ferner ist mindestens eine zumindest in einem Teilbereich der Klemmnut ausgebildete Freiraumnut vorhanden, deren Längsachse parallel zur Längsachse der Klemmnut verläuft. Mit Hilfe der ersten Klemmeinheit ist eine Zugkraft und somit die Zugbewegung von der Antriebseinheit auf das Zugmittel übertragbar. Mit Hilfe der zweiten Klemmeinheit ist die Position des Zugmittels fixierbar, sodass bei einem in einer Position fixierten Zugmittels nach dem Ausführen einer Zugbewegung durch die erste Klemmeinheit eine Rückbewegung entgegen der Zugrichtung dieser ersten Klemmeinheit möglich ist, ohne dass das Zugmittel entgegen der Zugrichtung bewegt wird. Auch die zweite Klemmeinheit kann in gleicher Weise wie zuvor für die erste Klemmeinheit beschrieben weitergebildet werden, insbesondere mit den Merkmalen der abhängigen Patentansprüche.

Eine weitere erfindungsgemäße Anordnung zum Ziehen eines Zugmittels umfasst ein als Seil, als Gestänge oder als Kette ausgebildetes Zugmittel und eine Vorrichtung nach Anspruch 1 oder eine der oben beschriebenen Weiterbildungen dieser Vorrichtung.

Besonders vorteilhaft ist es, wenn mit dem gezogenen Ende des Zugmittels ein Schneidwerkzeug, ein Spaltwerkzeug, ein Aufweitwerkzeug, ein Berstwerkzeug und/oder ein in eine im Erdreich vorhandene oder aufgeweitete Öffnung einzuziehendes Rohr verbunden ist. Dadurch können auf einfache Art aufgeweitete Öffnungen im Erdreich erzeugt und Rohre eingezogen werden.

Besonders vorteilhaft ist es, eine Winde vorzusehen, die ein dem gezogenen Ende des Zugmittels gegenüberliegendes Ende des Zugmittels aufwickelt, wenn das Zugmittel eine Kette oder ein Seil ist. Dadurch ist ein einfacher Arbeitsablauf der Baustelle möglich.

Eine Nut im Sinne der Erfindung ist jede längliche Vertiefung, die einen teilkreisförmigen, u-förmigen, c-förmigen rechteckigen, dreieckigen oder einen trapezförmigen Querschnitt hat, der vorzugsweise über die Länge der Nut konstant ist.

Weitere Merkmale und Vorteile der Erfindung ergeben sich aus der folgenden Beschreibung, die die Erfindung in Verbindung mit den beigefügten Figuren anhand von Ausführungsbeispielen näher erläutert.

Es zeigen:
- Figur 1: eine schematische perspektivische teilgeschnittene Darstellung einer Anordnung zum Erneuern einer im Erdreich verlegten Rohrleitung;
- Figur 2: eine schematische perspektivische Darstellung einer Seilzugvorrichtung;
- Figur 3: eine perspektivische Darstellung einer in der Seilzugvorrichtung nach den Figuren 1 oder 2 eingesetzten Klemmbacke zum Herstellen einer kraftschlüssigen Verbindung mit einem Zugseil gemäß einer ersten Ausführungsform;
- Figur 4: einen Querschnitt der Klemmbacke nach Figur 3 und eines in die Klemmbacke eingelegten Seils ohne Krafteinwirkung auf das Seil;
- Figur 5: den Querschnitt einer Klemmbacke nach Figur 4, mit einem Seil gemäß einer zweiten Ausführungsform;
- Figur 6: einen Querschnitt einer Klemmbacke mit einem Seil gemäß dem Stand der Technik;
- Figur 7: einen Querschnitt einer Klemmbacke mit einem Seil gemäß einer dritten Ausführungsform; und
- Figur 8: einen Querschnitt einer Klemmbacke gemäß Erfindung.

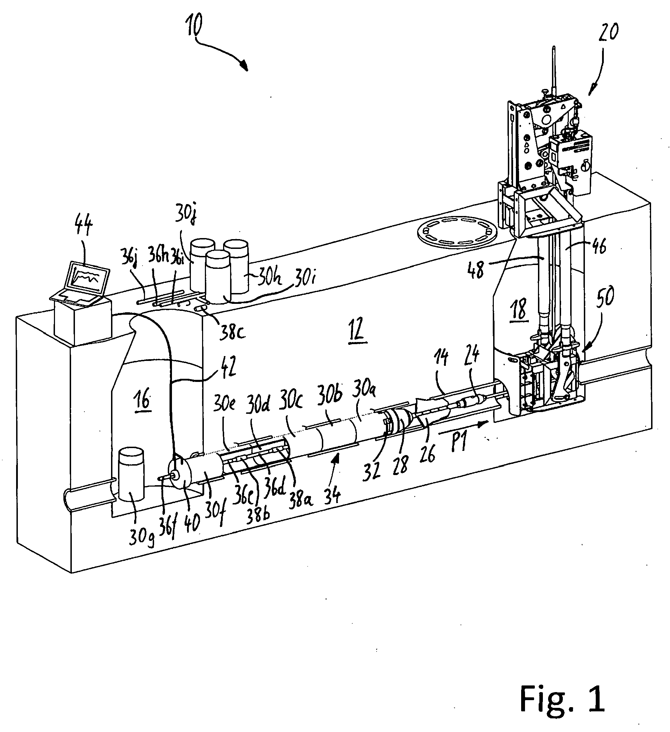

Figur 1 zeigt eine schematisch perspektivische teilgeschnittene Darstellung einer Anordnung 10 zum Erneuern einer im Erdreich 12 verlegten Rohrleitung 14. Die zu erneuernde Rohrleitung 14 ist eine Abwasserleitung, die zwischen zwei Revisionsschächten 16, 18 angeordnet ist. Die Anordnung 10 umfasst eine Seilzugmaschine 20 zum Ziehen eines Seils 22 dessen von der Seilzugmaschine 20 entferntes Ende 24 mit einem Schneidwerkzeug 26 verbunden ist, mit dessen Hilfe die alte, zu ersetzende Rohrleitung 14 aufgeschnitten wird.

Im vorliegenden Ausführungsbeispiel hat das Schneidwerkzeug 26 drei Schneidflügel, die sich in Zugrichtung P1 verjüngen, sodass der vordere Teil der Schneidflügel des Schneidwerkzeugs 26 in die zu ersetzende Rohrleitung 14 einführbar ist, ohne diese aufzuschneiden, wodurch eine sichere Führung des Schneidwerkzeugs 26 durch die Rohrleitung 14 beim Schneidevorgang möglich ist. Der hintere Teil der Schneidflügel schneidet dann die Wandung der zu ersetzenden Rohrleitung 14 auf. Mit dem von der Seilzugmaschine 20 entfernten Ende des Schneidwerkzeugs 26 ist ein Aufweitwerkzeug 28 verbunden, das mit einem Ende eines ersten Rohrabschnitts 30 über Verbindungselemente 32 verbunden ist. Die neue Rohrleitung 34 wird aus mehreren Rohrabschnitten 30a bis 30j zusammengesetzt, wobei zum Einziehen der Rohrabschnitte 30a bis 30j im Inneren der Rohrleitung Gestängeabschnitte 36d bis 36j angeordnet sind, die über Verbindungselemente 38h bis 38j miteinander verbindbar sind. Das Ende des letzten mit der Rohrleitung 34 verbundenen Rohrabschnitts 30f ist zum Einziehen der Rohrleitung 34 mit einer Verschlusskappe 40 verschlossen, durch die das Ende des aus den Gestängeabschnitten 36d bis 36f gebildeten Gestänges geführt ist. Die Verschlusskappe 40 ist mit dem letzten Gestängeabschnitt 36f derart verbunden, dass das durch die Gestängeabschnitte 36d bis 36f gebildete Gestänge das Aufweitwerkzeug 28 und die Verschlusskappe 40 miteinander verbindet. Dadurch wird eine durch die Seilzugvorrichtung 20 über das Zugseil 22 erzeugte Zugkraft auch über das Gestänge auf die Verschlusskappe 40 übertragen, sodass über die Verschlusskappe 40 eine Schubkraft auf die Rohrleitung 34 ausübt. Über einen in der Verschlusskappe 40 angeordneten Sensor (nicht dargestellt) wird die Position und/oder die über die Verschlusskappe 40 in die Rohrleitung 34 eingeleitete Schubkraft detektiert. Der Sensor ist über eine Signalleitung 42 mit einer Auswerteinheit 44 verbunden, die die Sensorsignale des Sensors auswertet. Die dadurch gewonnenen Informationen können zur Steuerung der Seilzugvorrichtung 20 genutzt werden.

Die Seilzugvorrichtung 20 ist über längenveränderbare Abstandselemente 46, 48 mit einer Umlenkeinheit 50 verbunden, über die die durch die Seilzugvorrichtung 20 erzeugte im Wesentlichen vertikale Zugbewegung in eine im Wesentlichen horizontal gerichtete Zugbewegung umgelenkt wird.

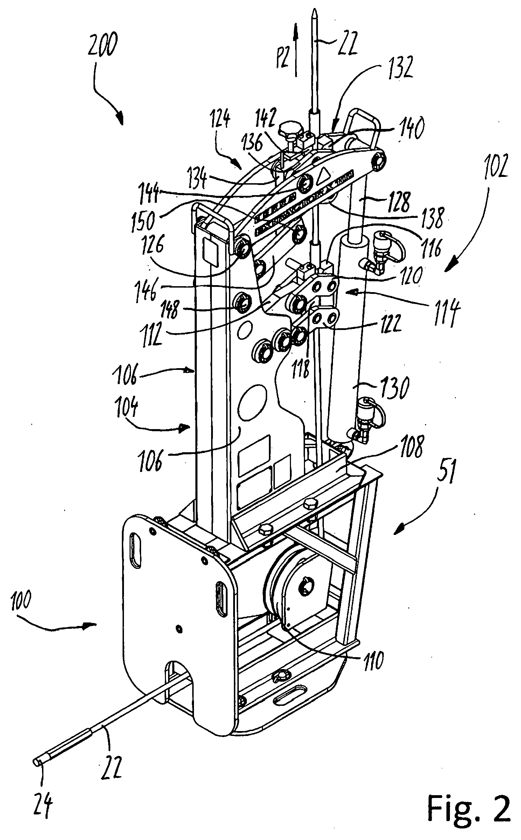

Figur 2 zeigt eine schematische perspektivische Darstellung einer Seilzugvorrichtung 200, die alternativ zu der Seilzugvorrichtung 20 nach Figur 1 einsetzbar ist. Die Seilzugvorrichtung 200 ist ohne ein zum Betrieb erforderliches Hydraulikaggregat gezeigt. Ferner umfasst die Seilzugvorrichtung 200 eine integrierte Umlenkeinheit 51, sodass die Seilzugvorrichtung 200 dazu vorgesehen ist, direkt im Versorgungsschacht 18 angeordnet zu werden. Der grundsätzliche Aufbau und Funktion der Seilzugvorrichtung 200 stimmt mit der Seilzugvorrichtung 20 nach Figur 1 überein. Im Folgenden wird der Aufbau und die Funktion der Seilzugvorrichtung 200 erläutert. Die Ausführungen und Erläuterungen gelten in gleicher Weise für die Seilzugvorrichtung 20 nach Figur 1.

Die Seilzugvorrichtung 200 hat eine Stützvorrichtung 100, auf der die Antriebseinheit 102 der Seilzugvorrichtung 200 montiert ist. Die Seilzugvorrichtung 200 ist dazu bestimmt, in einer Arbeitsgrube, wie dem Versorgungsschacht 18 nach Figur 1, eingesetzt zu werden, in die ein zu erneuerndes altes Leitungsrohr 14 oder eine zuvor hergestellte Erdbohrung mündet. Die Antriebseinheit 102 umfasst einen Rahmen 104 mit zwei miteinander verbundenen und zueinander parallelen Rahmenplatten 106, die zu einem c-förmigen Profil verbunden sind. Ferner hat die Antriebseinheit 102 einen Rahmenfuß 108, über den die Antriebseinheit mit der Umlenkeinheit 51 verbunden ist. Die Umlenkeinheit 51 hat eine drehbar gelagerte Umlenkrolle 110, über die das Zugseil 22 geführt ist.

Im mittleren Bereich des Rahmens 104 ist zwischen den Rahmenplatten 106 eine Halteplatte 112 befestigt, die zur Halterung einer allgemeinen mit 114 bezeichneten passiven ersten Klemmeinheit dient. Diese Klemmeinheit 114 umfasst zwei Klemmbacken 116, 118, die auf gegenüberliegenden Seiten des Zugseils 22 und einander gegenüberliegend angeordnet sind.

Die Klemmbacken 116, 118 sind jeweils über ein Hebelpaar 120, 122 sowohl untereinander als auch mit der Halteplatte 112 gelenkig verbunden. Die Anlenkpunkte der Hebel 120, 122 an den Klemmbacken 116,118 sind jeweils so gewählt, dass die Klemmbacke 116 bei einer Aufwärtsbewegung des Zugseils 22 in Richtung des Pfeils P2 mit in diese Richtung bewegt, d. h. nach oben mitgenommen, wird, sodass dadurch die Hebel 120, 122 verschwenkt und der Abstand zwischen den Klemmbacken 116 und 118 vergrößert wird. Dadurch kann das Zugseil 22 zwischen den Klemmbacken 116, 118 in Richtung des Pfeils P2 problemlos hindurch gleiten. Durch das Verschwenken der Hebel 120, 122 wird die Klemmverbindung zwischen den Klemmbacken und dem Seil 22 gelöst, wobei mindestens eine Klemmbacke 116, 118 in Kontakt mit dem Seil 22 bleibt, jedoch keine Klemmkraft auf das Seil 22 ausübt.

Wird bei einer Bewegung des Zugseils 22 entgegen der Richtung des Pfeils P2 die Klemmbacke 116 dagegen in die dem Pfeil P2 entgegengesetzte Richtung, d. h. nach unten verschoben, so werden auch die Hebel 120, 122 derart verschwenkt, dass sich die Klemmbacken 116, 118 einander annähern, wodurch das Zugseil 22 zwischen den Klemmbacken 116, 118 eingeklemmt wird. Das Lösen der Klemmbacken 116, 118 bei einer Bewegung des Seils 22 in Richtung des Pfeils P2 wird auch als Freigabestellung und die Positionierung der Klemmbacken 116, 118 bei einer Bewegung des Seils 22 entgegen des Pfeils P2 wird auch als Klemmstellung bezeichnet. Die Überführung der Klemmeinheit 114 von ihrer Klemmstellung in ihre Freigabestellung bzw. umgekehrt erfolgt somit allein durch die Bewegung des Zugseils 22 selbst. Die passive erste Klemmeinheit 114 ist somit selbsthemmend. Am oberen Ende des Rahmens 104 ist ein Schwenkarm 124 um eine Achse 126 schwenkbar angelenkt. An dem freien Ende des Schwenkarms 124 greift eine Kolbenstange 128 eines Hydraulikzylinders 130 an, der sich mit seinem anderen Ende am Rahmenfuß 108 abstützt. Zwischen den beiden Schenkeln des Schwenkarms 124 ist eine aktive zweite Klemmeinheit 132 angeordnet, die grundsätzlich wie die Klemmeinheit 114 aufgebaut ist, wobei jedoch eine Halteplatte 134 vorgesehen ist, an der über Hebelanordnungen 136, 138 Klemmbacken 140 gehalten sind. Die Halteplatte 134 ist am Schwenkarm 124 an einer Drehachse 144 schwenkbar gelagert. Mit ihrem anderen Ende ist die Halteplatte 134 über einen Doppellenker 146 mit den Rahmenplatten 106 um die Drehachsen 148, 150 gelenkig verbunden. Die Anordnung der Achsen und Elemente ist so getroffen, dass beim Ausfahren der Kolbenstange 128 und dem dadurch bewirkten Anheben des Schwenkarms 124 das Zugseil 22 automatisch zwischen den Klemmbacken 140, 142 der Klemmeinheit 132 geklemmt wird und dabei in Richtung des Pfeils P2 mitgenommen wird.

Wird die Kolbenstange 128 anschließend wieder eingefahren, d. h. wird der Schwenkarm 124 entgegen des Pfeils P2 abgesenkt, so werden die Klemmbacken 140, 142 der Klemmeinheit 132 gelöst, wobei gleichzeitig die Klemmbacken 116, 118 der passiven Klemmeinheit 114 das Zugseil 22 klemmen und in seiner Stellung festhält. Die Klemmbacken 116, 118, 140, 122 haben jeweils eine Klemmnut, deren Längsachsen parallel zur Längsachse des Seils 22 ausgerichtet sind, wenn sich das Seil in dem durch die jeweils gegenüberliegenden Klemmbacken 116, 118, 140, 142 gebildeten Klemmbereich befindet.

Diese Art von Seilzugsvorrichtung ist an sich bekannt. Jedoch sind bei den Seilzugsvorrichtungen 20, 200 neuartige Klemmbacken vorgesehen, die zusätzlich zur Klemmnut jeweils noch eine in der Klemmnut vorgesehene Freiraumnut haben, wie in Verbindung mit den nachfolgenden Figuren noch näher erläutert wird.

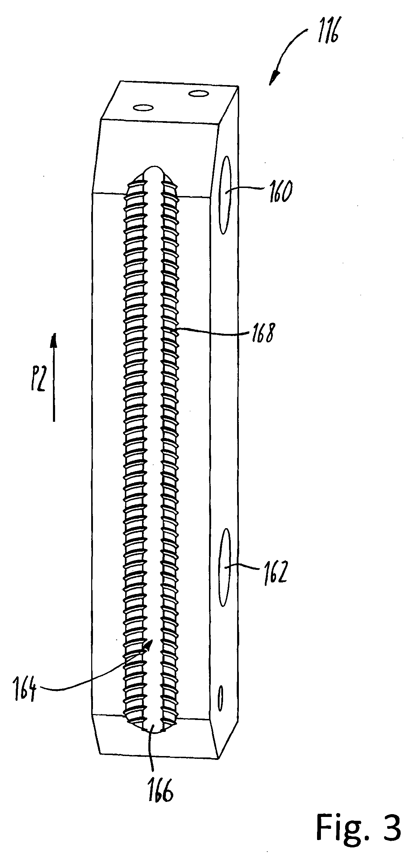

In Figur 3 ist eine perspektivische Darstellung einer in einer Seilzugvorrichtung 20, 200 nach den Figuren 1 oder 2 eingesetzten Klemmbacke 116 zum Herstellen einer kraftschlüssigen Verbindung mit dem Zugseil 22. Die Klemmbacken 116, 128, 140, 142 sind im vorliegenden Ausführungsbeispiel baugleich. Bei andern Ausführungsbeispielen können die Klemmbacken unterschiedlich ausgeführt sein, wobei der Klemmbereich der Klemmbacken bei allen Ausführungsformen mindestens eine Freiraumnut aufweist.

Die Klemmbacke 116 hat zwei Durchgangslöcher 160, 162, durch die zum Verbinden der Klemmbacke 116 mit den Hebelarmen 120, 122 jeweils ein Bolzen hindurchgeführt wird. Die Klemmbacke 116 hat eine Klemmnut 164, die dazu vorgesehen ist, das Seil 22 teilweise zu umschließen und auch im gelösten Zustand der Klemmbacken 116, 118, 140, 142 eine Führung des Seils 22 bewirkt. In der Klemmnut 164 ist in dessen Mitte eine Freistellungsnut 166 ausgebildet. Sowohl die Klemmnut 164 als auch die Freistellungsnut 166 haben einen teilkreisförmigen Querschnitt. Ferner sind in der Klemmnut 164 mehrere Vertiefungen 168 ausgebildet, die durch Gewindegangabschnitte gebildet sind, sodass die Vertiefungen eine Steigung in Richtung des Pfeils P2 haben. Alternativ können die Vertiefungen auch entlang einer Umfangslinie des Seils 22 angeordnet sein, wenn das Seil 22 mit Hilfe der Klemmbacken 116, 118 geklemmt ist.

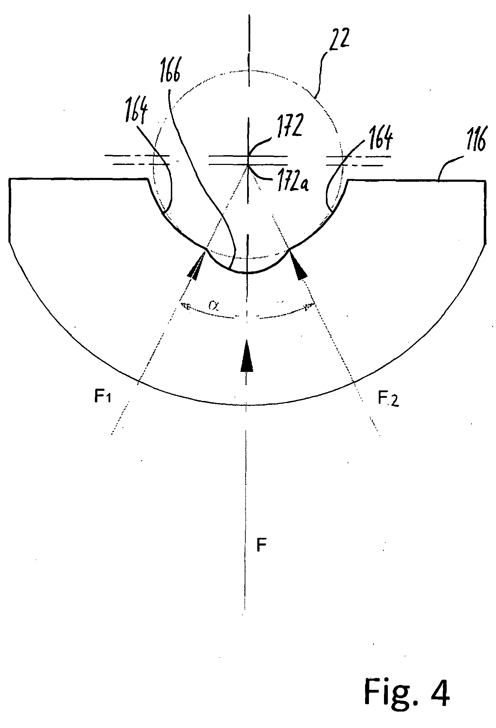

In Figur 4 ist eine Schnittdarstellung der Klemmbacke 116 nach Figur 3 dargestellt. Zusätzlich ist in Figur 4 die durch die Seilzugvorrichtung 200 auf die Klemmbacke 116 ausgeübte Andruckkraft F dargestellt. Diese Andruckkraft F wird aufgrund der durch die Klemmnut 164 und der Freistellungsnut 166 gebildeten Geometrie in eine Kraft F1 und eine gleichgroße Kraft F2 aufgeteilt, deren Summe größer als die Andruckkraft F ist. Das Seil 22 wird durch die Klemmbacke 116 zumindest an den Übergangsbereichen 168, 170 der Übergänge von der Klemmnut 164 in die Freistellungsnut 166 kontaktiert. Die Längsachse 172 des Seils 22 wird in die Position 172a verschoben, wenn das Seil 22 zwischen den Klemmbacken 116, 118 angeordnete Seil 22 mit dem durch die Andruckkraft F bewirkten Kräfte F1, F2 beaufschlagt wird, da sich das Seil 22 durch die durch die Klemmbacken 116, 118 auf das Seil 22 ausgeübte Andruckraft F verformt. Durch die Andruckkraft F wird eine kraftschlüssige Verbindung zwischen den Klemmbacken 116, 118 und dem Seil 22 hergestellt.

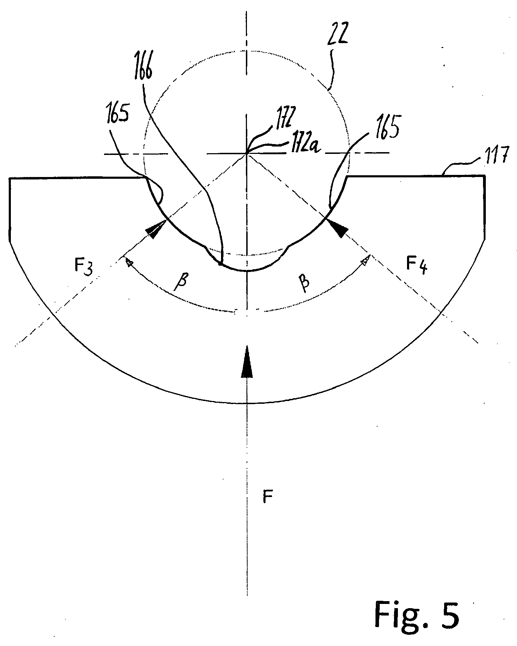

In Figur 5 ist ein Querschnitt einer Klemmbacke 117 und des Seils 22 gezeigt, wobei die Klemmbacke 117 eine Klemmnut 165 hat, deren Teilkreisdurchmesser mit dem Nenndurchmesser des Seils 22 übereinstimmt. Ferner hat die Klemmbacke 117 eine in der Klemmnut 165 ausgebildete Freiraumnut 166. Dadurch liegt die Mantelfläche des Seils im Unterschied zur Klemmbacke 116 nach Figur 4 flächig an den Kontaktbereichen der Klemmnut 165 an, sodass die Kräfte flächig von der Klemmbacke 116 auf das Seil 22 übertragen wird. Zur einfachen Darstellung werden die auf das Seil 22 wirkenden Kräfte F3 und F4 in der Mitte der flächigen Kontaktbereiche der Klemmnut 164 in das Seil 22 eingeleitet. Im dargestellten Ausführungsbeispiel sind die Kräfte F3 und F4 gleich groß und bei gleicher Andruckkraft F sind die Kräfte F3 und F4 größer als die Kräfte F1 und F2 bei der Klemmbacke 116 nach Figur 4, da der Winkel β zweischen dem Vektor der eingeleiteten Andruckkraft F und den Vektoren der wirksamen Kraft F3 bzw. F4 nach Figur 5 größer als der Winkel α zwischen dem Vektor der Andruckkraft F und den Vektoren der auf das Seil 22 wirkende Kräfte F1 und F2 nach Figur 4 ist. Dadurch ist die Klemmwirkung der Klemmbacke 167 gegenüber der Klemmbacke 116 nochmals verbessert.

Durch das Vorsehen der Freiraumnut 166 in der Klemmnut 165 kann das Seil 22, das einen mit dem Teilkreisdurchmesser der Klemmnut 165 übereinstimmenden Nenndurchmesser hat, nach einem Klemmvorgang wieder im normalen Arbeitsablauf der Seilzugmaschine 20, 200 aus der Klemmnut 165 gelöst werden.

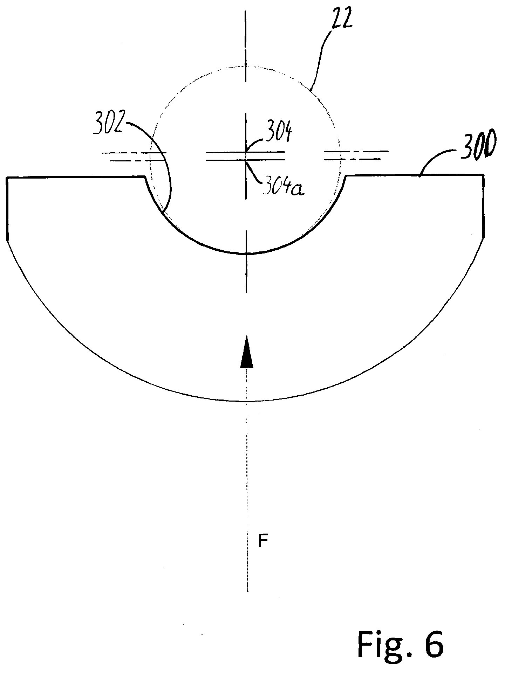

In Figur 6 ist ein Querschnitt einer Klemmbacke 300 mit einem Seil 22 gemäß dem Stand der Technik dargestellt, dass lediglich eine Klemmnut 302, jedoch keine Freistellungsnut hat. Bei dieser Geometrie der Klemmbacke 300 wird die Andruckkraft F direkt in das Seil 22 eingeleitet, wobei sich durch die Andruckkraft F der Querschnitt des Seil 22 verformt, sodass die Mittelachse 304 des Seils 22 ähnlich wie bei der Klemmbacke 116 nach den Figuren 3 bis 5 in die Position 304a verschoben wird. Bei einer solchen im Stand der Technik bekannten Klemmbacke 300 ist der Teilkreisdurchmesser der Klemmnut 302 immer größer als der Durchmesser des Seils 22 zu wählen, da sich das Seil 22 sonst nach einem Klemmvorgang nicht ohne Weiteres aus der Klemmnut 302 lösen lässt. Die Klemmkraft F weicht bei der Klemmbacke 300 direkt auf das in die Klemmnut 302 eingelegte Seil 22.

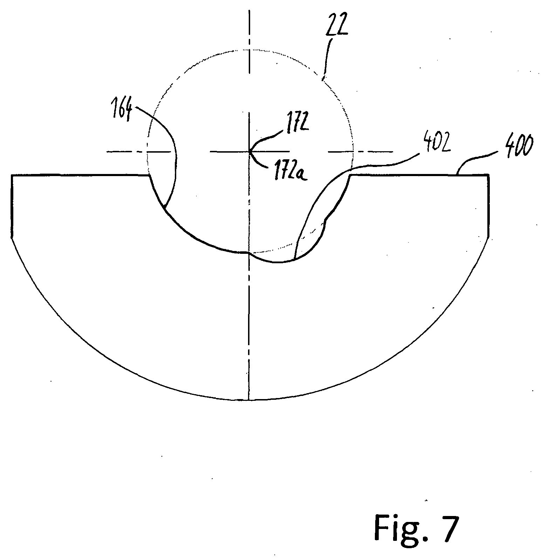

Figur 7 zeigt einen Querschnitt einer Klemmbacke 400 mit einem Seil 22 gemäß einer zweiten Ausführungsform. Bei dieser Ausführungsform ist in der Klemmnut 164 eine außermittige Freistellungsnut 402 vorgesehen.

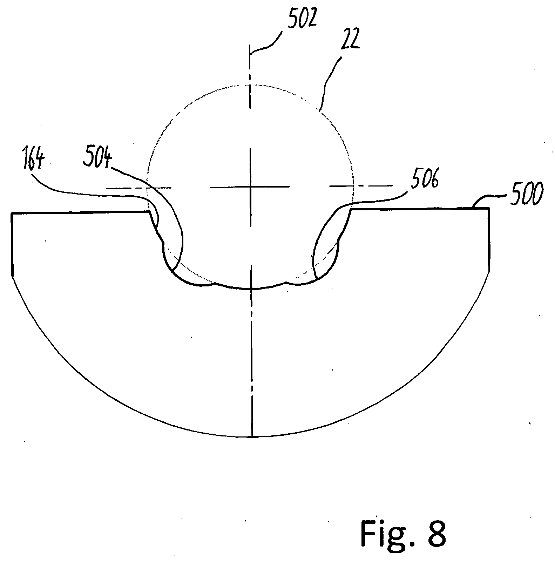

In Figur 8 ist erfindungsgemäß ein Querschnitt einer Klemmbacke 500 mit dem Seil 22 dargestellt, bei der in der Klemmnut 164 zwei zu einer Mittelebene 502 symmetrisch angeordnete Freistellungsnuten 504, 506 ausgebildet sind.

Besonders vorteilhaft ist es, wenn bei allen Ausführungsformen die Freistellungsnuten 166, 402, 504, 506 über die gesamte Länge der jeweiligen Klemmnut 164 verläuft, wobei die Längsachsen der Freistellungsnuten 166,402, 504, 506 parallel zur Längsachse der Klemmnut 164 verlaufen. Eine besonders einfache Handhabung der Seilzugvorrichtung 20, 200 ergibt sich bei einer geraden, durchgehenden Klemmnut auf der dem Klemmbereich, in dem das Seil 22 hindurchgeführt ist, zugewandten Seite der Klemmbacke 116, 118, 140, 142, 400, 500. Bei einer alternativen Ausführungsform können auch gekrümmte Verläufe der Klemmbereiche vorgesehen sein, wobei die Klemmnuten auch dann auf der dem Klemmbereich zugewandten Seite der Klemmbacke jeweils durchgehend sind und vorzugsweise eine konstante Tiefe haben. Die Längsachse der Klemmnut und der Freistellungsnuten verlaufen dann in einem konstanten Abstand zum gekrümmten Klemmbereich.

In Verbindung mit den Ausführungsbeispielen wurde als Zugmittel ein Seil 22 eingesetzt, wobei dieses vorzugsweise ein Drahtseil, insbesondere ein Stahlseil ist. Die Erfindung lässt sich jedoch auch dann vorteilhaft einsetzen, wenn das Zugmittel anstatt des Seils 22 ein Gestänge oder eine Kette eingesetzt wird.

### Bezugszeichenliste

- 10: Anordnung
- 12: Erdreich
- 14: zu ersetzende Rohrleitung
- 16, 18: Revisionsschacht
- 20: Seilzugvorrichtung
- 22: Seil
- 24: entferntes Ende des Seils
- 26: Schneidwerkzeug
- 28: Aufweitwerkzeug
- 30a bis 30j: Rohrabschnitt eines neu einzuziehenden Rohrs
- 32: Verbindungselement
- 34: neues Rohr
- 36c bis 36j: Gestängeabschnitt
- 38a bis 38c: Verbindungselement
- 40: Verschlusskappe
- 42: signalleitung
- 44: Auswerteeinheit
- 46, 48: Abstandselemente
- 50, 51: Umlenkeinheit
- 100: Stützvorrichtung
- 102: Antriebseinheit
- 104: Rahmen
- 106: Rahmenplatte
- 108: Rahmenfuß
- 112: Halteplatte
- 114: erste Klemmeinheit
- 116, 117, 118: Klemmbacke
- 120, 122: Hebel
- 124: Schwenkarm
- 126: Drehachse
- 128: Kolbenstange
- 130: Hydraulikzylinder
- 132: zweite Klemmeinheit
- 134: Halteplatte
- 136, 138: Hebel
- 140, 142: Klemmbacke
- 144: Drehachse
- 146: Doppelhebel
- 148, 150: Drehachse
- 160, 162: Durchgangsloch
- 164, 165: Klemmnut
- 166, 402, 504, 506: Freistellungsnut
- 168: Quernut
- 200: Seilzugvorrichtung
- 300, 400, 500: Klemmbacke
- 502: Mittelebene
- P1, P2: Richtungspfeile

## Patentansprüche

1. Vorrichtung zum Ziehen eines Zugmittels, insbesondere zum Ziehen eines Seils, eines Gestänges oder einer Kette,
mit mindestens einer Klemmbacke (116, 118, 140, 142, 400, 500) zum Herstellen zumindest einer kraftschlüssigen Verbindung mit dem Zugmittel (22) und zum Übertragen einer von einer Antriebseinheit (30) erzeugten Zugkraft auf das Zugmittel (22), wobei das Zugmittel (22) zum Herstellen der kraftschlüssigen Verbindung in einem zwischen der Klemmbacke (116, 118, 140, 142, 400, 500) und mindestens einem Gegendruckelement (116, 118, 140, 142, 400, 500) gebildeten Klemmbereich anordenbar ist,
wobei die Klemmbacke (116, 118, 140, 142, 400, 500) eine Klemmnut (164) hat, deren Längsachse parallel zu der Längsachse eines Zugmittels (22) verläuft, wenn dieses im Klemmbereich angeordnet ist, **gekennzeichnet durch** mehrere zumindest in einem Teilbereich der Klemmnut (164) ausgebildete Freiraumnuten (166, 402, 504, 506), deren Längsachsen jeweils parallel zur Längsachse der Klemmnut verlaufen und die in Längsrichtung der Klemmnut (164) hintereinander angeordnet und/oder deren Längsachsen parallel sind.

2. Vorrichtung nach Anspruch 1, **dadurch gekennzeichnet, dass** die Klemmbacke eine erste Klemmbacke (116, 140) ist, die eine erste Klemmnut (164) und mehrere erste Freiraumnuten (166, 402, 504, 506) hat, und dass das Gegendruckelement durch mindestens eine der ersten Klemmbacke (116, 140) gegenüberliegenden zweiten Klemmbacke (118, 142) gebildet ist,
dass die zweite Klemmbacke (118, 142) eine zweite Klemmnut (164) zum teilweisen Umschließen des Zugmittels (22) hat, wenn dieses im Klemmbereich angeordnet ist, und
dass mindestens eine zumindest in einem Teilbereich der zweiten Klemmnut (164) ausgebildete zweite Freiraumnut (166, 402, 504, 506) vorgesehen ist, deren Längsachse parallel zur Längsachse der zweiten Klemmnut (164) verläuft.

3. Vorrichtung nach einem der vorhergehenden Ansprüche, **dadurch gekennzeichnet, dass** die Freiraumnut (166, 402, 504, 506) sich entlang der gesamten Länge der jeweiligen Klemmnut (164) erstreckt.

4. Vorrichtung nach einem der vorhergehenden Ansprüche, **dadurch gekennzeichnet, dass** in der zweiten Klemmnut (164) mehrere Freiraumnuten (166, 402, 504, 506) vorgesehen sind, die in Längsrichtung der zweiten Klemmnut (164) hintereinander angeordnet und/oder deren Längsachsen parallel sind.

5. Vorrichtung nach einem der vorhergehenden Ansprüche 2 bis 4, **dadurch gekennzeichnet, dass** die Klemmnut (164) mehrere in Längsrichtung hintereinander angeordnete Quernuten (168) und/oder vorstehende Elemente aufweist.

6. Vorrichtung nach Anspruch 5, **dadurch gekennzeichnet, dass** die Quernuten (168) und/oder vorstehenden Elemente durch die Freiraumnut (166, 402, 504, 506) unterbrochen sind.

7. Vorrichtung nach Anspruch 5, **dadurch gekennzeichnet, dass** der Querschnitt der Quernuten (168) und/oder vorstehenden Elemente im Bereich der Freiraumnut (166, 402, 504, 506) vermindert ist.

8. Vorrichtung nach einem der vorhergehenden Ansprüche, **dadurch gekennzeichnet, dass** die Klemmnut (164) durch eine teilkreisförmige Vertiefung gebildet ist, deren Radius größer oder gleich dem Nennradius des Zugmittels (22) ist.

9. Vorrichtung nach einem der vorhergehenden Ansprüche, **dadurch gekennzeichnet, dass** die Freiraumnut (166, 402, 504, 506) einen teilkreisförmigen oder u-förmigen Querschnitt hat.

10. Vorrichtung nach einem der vorhergehenden Ansprüche, **dadurch gekennzeichnet, dass** der Übergang zwischen der Klemmnut (164) und der Freiraumnut (166, 402, 504, 506) durch eine abgerundete Kannte gebildet ist.

11. Anordnung zum Ziehen eines Zugmittels, insbesondere zum Ziehen eines Seils, eines Gestänges oder einer Kette,
mit einer ersten Klemmeinheit (132), die eine Vorrichtung nach einem der vorhergehenden Ansprüche umfasst,
und mit mindestens einer zweiten Klemmeinheit (114), die mindestens eine Klemmbacke (116, 118) zum Herstellen zumindest einer kraftschlüssigen Verbindung zwischen dem Zugmittel (22) und der Vorrichtung umfasst,
wobei das Zugmittel (22) zum Herstellen der kraftschlüssigen Verbindung in einem zwischen der Klemmbacke (116) und mindestens einem Gegendruckelement (118) gebildeten zweiten Klemmbereich anordenbar ist,
wobei die Klemmbacke (116, 118) eine Klemmnut (164) hat, deren Längsachse parallel zu der Längsachse des Zugmittels (22) verläuft, wenn dieses im Klemmbereich angeordnet ist,
wobei mindestens eine zumindest in einem Teilbereich der Klemmnut (164) ausgebildete Freiraumnut (166, 402, 504, 506) vorhanden ist, deren Längsachse parallel zur Längsachse der Klemmnut (164) verläuft,
wobei mit Hilfe der ersten Klemmeinheit (132) die Zugbewegung von der Antriebseinheit (30) auf das Zugmittel (22) übertragbar ist und wobei mit Hilfe der zweiten Klemmeinheit (114) das die Position des Zugmittels (22) fixierbar ist.

12. Anordnung zum Ziehen eines Zugmittels, insbesondere zum Ziehen eines Seils, eines Gestänges oder einer Kette, insbesondere nach Anspruch 11, mit einem als Seil, als Gestänge oder als Kette ausgebildeten Zugmittel (22) und einer Vorrichtung nach einem der vorhergehenden Ansprüche 1 bis 10.

## Claims

1. A device for pulling a traction means, in particular for pulling a rope, a linkage or a chain,
with at least one clamp jaw (116, 118, 140, 142, 400, 550) for producing at least one friction-locked connection with the traction means (22) and for transferring a traction force generated by a drive unit (30) to the traction means (22), wherein the traction means (22) can be arranged within a clamp area formed between the clamp jaw (116, 118, 140, 142, 400, 500) and at least one counter-pressure element (116, 118, 140, 142, 400, 500) in order to produce the friction-locked connection,
wherein the clamp jaw (116, 118, 140, 142, 400, 500) has a clamping groove (164) whose longitudinal axis is arranged in parallel to the longitudinal axis of the traction means (22) when the latter is arranged within the clamping area, **characterized by** several clearance grooves (166, 402, 504, 506) formed at least in a partial area of the clamping groove (164), the longitudinal axes of which clearance grooves being each oriented in parallel with the longitudinal axis of the clamping groove and the clearance grooves being arranged consecutively in the longitudinal direction of the clamping groove (164) and/or the longitudinal axes of the clearance grooves being parallel.

2. The device according to claim 1, **characterized in that** the clamping jaw is a first clamping jaw (116, 140) which has a first clamping groove (164) and several first clearance grooves (166, 402, 504, 506) and **in that** the counter-pressure element is formed by at least one second clamping jaw (118, 142) arranged opposite the first clamping jaw (116, 140),
**in that** the second clamping jaw (118, 142) has a second clamping groove (164) intended to partially enclose the traction means (22), when the latter is arranged within the clamping area, and
**in that** at least one second clearance groove (166, 402, 504, 506) formed at least in a partial area of the second clamping groove is provided, whose longitudinal axis is oriented in parallel with the longitudinal axis of the second clamping groove (164).

3. The device according to one of the preceding claims, **characterized in that** the clearance groove (166, 402, 504, 506) extends along the entire length of the respective clamping groove (164).

4. The device according to one of the preceding claims **characterized in that** several clearance grooves (166, 402, 504, 506) are provided in the second clamping groove which are arranged consecutively in the longitudinal direction of the second clamping groove (164) and/or whose longitudinal axes are parallel.

5. The device according to one of preceding claims 2 to 4, **characterized in that** the clamping groove (164) is provided with several transverse grooves (168) and/or projecting elements arranged consecutively in the longitudinal direction.

6. The device according to claim 5, **characterized in that** the transverse grooves (168) and/or projecting elements are intersected by the clearance groove (166, 402, 504, 506).

7. The device according to claim 5, **characterized in that** the cross section of the transverse grooves (168) and/or of the projecting elements is reduced in the area of the clearance groove (166, 402, 504, 506).

8. The device according to one of the preceding claims **characterized in that** the clamping groove (164) is formed by a partially circular recess whose radius is bigger than or equal to the nominal radius of the traction means (22).

9. The device according to one of the preceding claims **characterized in that** the clearance groove (166, 402, 504, 506) has a partially circular or U-shaped cross-section.

10. The device according to one of the preceding claims **characterized in that** the transition between the clamping groove (164) and the clearance groove (166, 402, 504, 506) is formed by a rounded edge.

11. An arrangement for pulling a traction means, in particular for pulling a rope, a linkage or a chain,
with a first clamping unit (132) comprising a device according to one of the preceding claims,
and with at least one second clamping unit (114) which comprises at least one clamping jaw (116, 118) for producing at least a force-fit connection between the traction means (22) and the device,
wherein the traction means (22) can be arranged within a second clamping area formed between the clamping jaw (116) and at least one counter-pressure element (118) for producing the force-fit connection,
wherein the clamping jaw (116, 118) has a clamping groove (164) whose longitudinal axis is oriented in parallel with the longitudinal axis of the traction means (22), when the latter is arranged within the clamping area,
wherein at least one clearance groove (166, 402, 504, 506) formed in at least a partial area of the clamping groove (164) is provided, whose longitudinal axis extends in parallel with the longitudinal axis of the clamping groove (164),
wherein with the help of the first clamping unit (132) the traction movement can be transferred from the drive unit (30) to the traction means (22) and wherein with the help of the second clamping unit (114) the position of the traction means (22) can be locked.

12. An arrangement for pulling a traction means, in particular for pulling a rope, a linkage or a chain, in particular according to claim 11, with a traction means (22) in the form of a rope, a linkage or a chain and a device according to one of the preceding claims 1 to 10.

## Revendications

1. Dispositif permettant de tirer un moyen de traction, en particulier de tirer un câble, une tringlerie ou une chaîne,
comprenant au moins une mâchoire de serrage (116, 118, 140, 142, 400, 500) servant à établir au moins une liaison à force avec le moyen de traction (22) et à transférer une force de traction produite par une unité d'entraînement (30) sur le moyen de traction (22), le moyen de traction (22), pour établir la liaison à force, pouvant être agencé dans une zone de serrage formée entre la mâchoire de serrage (116, 118, 140, 142, 400, 500) et au moins un élément de contre-pression (116, 118, 140, 142, 400, 500),
la mâchoire de serrage (116, 118, 140, 142, 400, 500) présentant une rainure de serrage (164), dont l'axe longitudinal s'étend parallèlement à l'axe longitudinal d'un moyen de traction (22) lorsque ce dernier est agencé dans la zone de serrage, **caractérisé par**
plusieurs rainures à volume libre (166, 402, 504, 506) qui sont ménagées au moins dans une partie de la rainure de serrage (164), dont les axes longitudinaux s'étendent respectivement parallèlement à l'axe longitudinal de la rainure de serrage, et qui sont situées les unes derrière les autres dans la direction longitudinale de la rainure de serrage (164) et/ou dont les axes longitudinaux sont parallèles.

2. Dispositif selon la revendication 1, **caractérisé en ce que** la mâchoire de serrage est une première mâchoire de serrage (116, 140) qui présente une première rainure de serrage (164) et plusieurs rainures à espace libre (166, 402, 504, 506), et **en ce que** l'élément de contre-pression est formé par au moins une deuxième mâchoire de serrage (118, 142) opposée à la première mâchoire de serrage (116, 140),
**en ce que** la deuxième mâchoire de serrage (118, 142) présente une deuxième rainure de serrage (164) destinée à entourer au moins en partie le moyen de traction (22), lorsque ce dernier est agencé dans la zone de serrage, et
**en ce qu'**au moins une deuxième rainure à espace libre (166, 402, 504, 506) ménagée au moins dans une partie de la deuxième rainure de serrage, et dont l'axe longitudinal s'étend parallèlement à l'axe longitudinal de la deuxième rainure de serrage (164), est prévue.

3. Dispositif selon l'une quelconque des revendications précédentes, **caractérisé en ce que** la rainure à espace libre (166, 402, 504, 506) s'étend le long de toute la longueur de la rainure de serrage (164) concernée.

4. Dispositif selon l'une quelconque des revendications précédentes, **caractérisé en ce que** plusieurs rainures à espace libre (166, 402, 504, 506), qui sont situées les unes derrière les autres dans la direction longitudinale de la deuxième rainure de serrage (164) et/ou dont les axes longitudinaux sont parallèles, sont ménagées dans la deuxième rainure de serrage (164).

5. Dispositif selon l'une quelconque des revendications 2 à 4, **caractérisé en ce que** la rainure de serrage (164) comprend plusieurs rainures transversales (168) et/ou éléments en saillie situés les uns derrière les autres dans la direction longitudinale.

6. Dispositif selon la revendication 5, **caractérisé en ce que** les rainures transversales (168) et/ou les éléments en saillie sont interrompus par la rainure à espace libre (166, 402, 504, 506).

7. Dispositif selon la revendication 5, **caractérisé en ce que** la section transversale des rainures transversales (168) et/ou des éléments en saillie est diminuée dans la zone de la rainure à espace libre (166, 402, 504, 506).

8. Dispositif selon l'une quelconque des revendications précédentes, **caractérisé en ce que** la rainure de serrage (164) est formée par un creux en forme d'arc de cercle, dont le rayon est supérieur ou égal au rayon nominal du moyen de traction (22).

9. Dispositif selon l'une quelconque des revendications précédentes, **caractérisé en ce que** la rainure à espace libre (166, 402, 504, 506) présente une section transversale en forme d'arc de cercle ou en forme de u.

10. Dispositif selon l'une quelconque des revendications précédentes, **caractérisé en ce que** la transition entre la rainure de serrage (164) et la rainure à espace libre (166, 402, 504, 506) est formée par un bord arrondi.

11. Système permettant de tirer un moyen de traction, en particulier de tirer un câble, une tringlerie ou une chaîne,
comprenant une première unité de serrage (132), qui comporte un dispositif selon l'une quelconque des revendications précédentes,
et comprenant au moins une deuxième unité de serrage (114), qui comporte au moins une mâchoire de serrage (116, 118) servant à établir au moins une liaison à force entre le moyen de traction (22) et le dispositif,
le moyen de traction (22), pour établir la liaison à force, pouvant être agencé dans une deuxième zone de serrage formée entre la mâchoire de serrage (116) et au moins un élément de contre-pression (118),
la mâchoire de serrage (116, 118) présentant une rainure de serrage (164), dont l'axe longitudinal s'étend parallèlement à l'axe longitudinal du moyen de traction (22) lorsque ce dernier est agencé dans la zone de serrage,
au moins une rainure à espace libre (166, 402, 504, 506) ménagée au moins dans une partie de la rainure de serrage (164) étant présente, dont l'axe longitudinal s'étend parallèlement à l'axe longitudinal de la rainure de serrage (164),
le mouvement de traction pouvant être transféré de l'unité d'entraînement (30) sur le moyen de traction (22) à l'aide de la première unité de serrage (132) et la position du moyen de traction (22) pouvant être fixée à l'aide de la deuxième unité de serrage (114).

12. Système permettant de tirer un moyen de traction, en particulier de tirer un câble, une tringlerie ou une chaîne, en particulier selon la revendication 11, comprenant un moyen de traction (22) réalisé sous la forme d'un câble, d'une tringlerie ou d'une chaîne et un dispositif selon l'une quelconque des revendications 1 à 10.
